# EUROPÄISCHE PATENTSCHRIFT

(11) **EP 0 955 522 B1**
(45) Veröffentlichungstag und Bekanntmachung des Hinweises auf die Patenterteilung: **24.09.2003**
(21) Anmeldenummer: 99107215.8
(22) Anmeldetag: 14.04.1999
(51) Int. Cl.: G01D 3/08, G01D 5/16, G01D 5/14, G01P 1/00, G01B 7/14

(54) **Verfahren und Schaltung zur Überprüfung der Weite des Luftspaltes bei einem Drehzahlsensor**
Method and circuit for checking the airgap of a revolution sensor
Méthode et circuit pour contrôler l'entrefer d'un tachymètre

(30) Priorität: 04.05.1998 DE 19819783
(43) Veröffentlichungstag der Anmeldung: 10.11.1999
(73) Patentinhaber: Siemens Aktiengesellschaft, 80333 München (DE)
(72) Erfinder: Wallrafen, Werner, 65719 Hofheim (DE)

(56) Entgegenhaltungen:
- EP-A- 0 282 732
- EP-A- 0 569 924
- WO-A-96/10751
- DE-A- 3 201 811
- DE-A- 19 623 101

## Beschreibung

Die Erfindung betrifft ein Verfahren und eine Schaltung zur Überprüfung der Weite des Luftspaltes bei einem Drehzahlsensor gemäß dem Oberbegriff der Patentansprüche 1 bzw. 3.

Drehzahlsensoren auf magnetischer Basis werden beispielsweise in Kraftfahrzeugen in Verbindung mit Antiblockiersystemen eingesetzt. Eine Schaltung für einen derartigen Sensor ist beispielsweise aus WO 96/10751 bekannt. Die Schaltung verändert die Form oder die Stärke eines Ausgangssignals in Abhängigkeit von der Luftspaltweite. Das Ausgangssignal wird von der angeschlossenen Steuereinrichtung ausgewertet. Der Aufwand für die Auswertung ist jedoch bei einer derartigen Vorgehensweise sehr hoch, da das Ausgangssignal nicht in diskreter Form vorliegt. Des weiteren ist die direkte Aufmodulation von Drehrichtungsinformationen ein unsicheres Verfahren, da Störungen einen starken Einfluss haben.

Aus der EP 0 569 924 A1 ist eine Vorrichtung und ein Verfahren zur Überwachung eines Sensors bekannt, bei welcher die Vergrößerung bzw. Verkleinerung eines Luftspaltes zwischen einem Sensor und einem sich an diesen Sensor vorbeibewegenden Teiles erkennbar ist. Zu diesem Zweck wird einer vom Sensor erzeugten Wechselspannung eine Gleichspannung überlagert, wobei der zeitliche Abstand zwischen ansteigender und absteigender Flanke der Wechselspannung und der Gleichspannung ein Maß für den Abstand des Luftspaltes ist.

Aufgabe der vorliegenden Erfindung ist es, ein Verfahren und eine einfache, preiswerte Schaltung für einen magnetischen Drehzahlsensor zur Erzeugung eines diskreten Drehzahlsignals anzugeben, welches Informationen für die Weite des Luftspaltes enthält, wobei für die Weiterleitung dieses Signals an andere Einrichtungen über eine Leitungsverbindung zwei Leitungen ausreichen.

Diese Aufgabe wird mit dem erfindungsgemäßen Verfahren gemäß dem Patenanspruch 1 gelöst.

Bei einer ersten Ausgestaltung des erfindungsgemäßen Verfahrens ist vorgesehen, dass das Tastverhältnis bei innerhalb eines Toleranzbereichs liegender Luftspaltweite bei 50 % innerhalb eines Toleranzbereichs von ±15 % liegt und dass das Tastverhältnis bei Amplituden des Messsignals außerhalb der vorgegebenen Grenzen mindestens 10 % von den jeweiligen Grenzen des Toleranzbereichs abweicht. Ein Tastverhältnis von 50 % ergibt eine hohe Sicherheit gegen Störeinflüsse.

Bei der erfindungsgemäße Schaltung, die zur Verwirklichung des erfindungsgemäßen Verfahrens vorgesehen ist, sind die Messsignale an einem Amplitudendiskriminator geführt, der bei Amplituden des Messsignals außerhalb vorgegebener Grenzen Signale zur Änderung des Schwellwertes erzeugt, welche einer Detektorschaltung zugeleitet werden, die aus der Amplitude der Messsignale einen geänderten Schwellwert ermittelt, welcher der Vergleicherschaltung vorgegeben wird, wodurch das Tastverhältnis sicher messbar von dem vorgegebenen Bereich abweicht.

In einer ersten Ausgestaltung der erfindungsgemäßen Schaltung ist als Ausgangsstufe eine Stromquelle vorgesehen, die von der steuereinrichtung über eine erste Leitung mit einer Spannung beaufschlagt ist und die über eine zweite Leitung einen die Ausgangssignale bildenden Strom der Steuereinrichtung zuführt. Dadurch ist es ohne großen Schaltungsaufwand möglich, daß die Schaltung über dieselben Leitungen eine annähernd konstante Betriebsspannung erhält, über die auch die Ausgangssignale in Form von Strompulsen zur Steuereinrichtung übertragen werden. Es sind also keine zusätzlichen Leitungen für die Übertragung der Signale notwendig.

Das Drehrichtungssignal kann ohne zusätzlichen Leitungsaufwand übertragen werden, wenn, wie es in einer ersten Weiterbildung der Erfindung vorgesehen ist, die Stromquelle in Abhängigkeit von der Drehrichtung des Rotors auf unterschiedliche Pegelwerte des Ausgangsstroms einstellbar ist. Die Drehrichtungsinformation kann dadurch über dieselben Leitungen wie alle übrigen Informationen übertragen werden.

In einer nächsten Weiterbildung der Erfindung ist vorgesehen, daß der Sensor zwei magnetfeldempfindliche Sensorelemente aufweist, die derart angeordnet sind, daß ihre Meßsignale phasenversetzt sind. Aus der Verknüpfung der sich ergebenden Rechtecksignale mittels einer Exklusiv-Oder-Funktion ergibt sich ein Drehrichtungssignal.

Um mit dem Drehrichtungssignal die Stromquelle steuern zu können, sind bei einer nächsten Weiterbildung der Erfindung Mittel zur Erzeugung eines Drehrichtungssignals zur Darstellung der Drehrichtung des Rotors aufweist. Weiterhin ist vorgesehen, daß die Detektorschaltung an die Stromquelle das Drehrichtungssignal übermittelt und daß die Stromquelle in Abhängigkeit von dem Drehrichtungssignal die Amplitude des Ausgangsstroms ändert.

Die Ausgangssignale enthalten die Information der Drehrichtung. Darum ist bei einer nächsten vorteilhaften Weiterbildung der Erfindung vorgesehen, daß die Steuereinrichtung anhand der Amplitude des Ausgangsstromes der Schaltung die Drehrichtung des Rotors feststellt.

Bei zwei weiteren, alternativen Weiterbildungen der Erfindung ist vorgesehen, daß bei Amplituden des Meßsignals außerhalb vorgegebener Grenzen die Änderung des Schwellwertes durch den Amplitudendiskriminator stetig oder sprunghaft erfolgt. Der Fachmann kann im Einzelfall entscheiden, ob er zugunsten einer schärferen Abgrenzung der Tastverhältnisse die sprunghafte Änderung vorzieht, oder ob er zugunsten einer Darstellbarkeit von Zwischenwerten die stetige Änderung bevorzugt.

Vorzugsweise ist vorgesehen, daß der Rotor ein magnetisches Polrad ist.

Mehrere Ausführungsbeispiele der Erfindung sind in der Zeichnung anhand mehrerer Figuren dargestellt. Sie sind in der nachfolgenden Beschreibung näher erläutert. Es zeigt:
- Fig. 1: eine erste erfindungsgemäße Schaltung,
- Fig. 2: einen Ausschnitt einer zweiten erfindungsgemäßen Schaltung,
- Fig. 3: den Meßspannungsverlauf zweier erfindungsgemäßer Schaltungen bei Drehrichtungswechsel und
- Fig. 4: die Verläufe der Ausgangsspannung einer erfindungsgemäßen Schaltung bei verschiedenen Spaltweiten.

Gleiche Teile sind in den Figuren mit gleichen Bezugszeichen versehen.

In der Nähe des, beispielsweise mit einem Rad eines Kraftfahrzeuges verbundenen, als Polrad 1 ausgeführten Rotors, ist ein erfindungsgemäßer Drehzahlsensor 2 derart angeordnet, daß die Sensorelemente 3, 3' den Magnetpolen 4 des Polrades 1 mit einem geringen Abstand d gegenüberstehen. Das Polrad 1 dreht sich mit einer Winkelgeschwindigkeit omega. Die Änderungen der magnetischen Flüsse B₁, B₂, die sich aufgrund der Bewegung des Polrades 1 ergeben, werden von den Sensorelementen 3, 3' in Meßsignale U_{B1}, U_{B2} umgesetzt. Die Amplituden der Meßsignale U_{B1}, U_{B2} hängen von der Luftspaltweite d ab. Je größer der Luftspalt desto kleiner ist der magnetische Fluß und desto kleiner ist die Amplitude des Meßsignals. Die Meßsignale U_{B1}, U_{B2} werden Verstärkern 5, 5' zugeleitet. Ein erstes verstärktes Meßsignal U_{B1} wird einer Vergleicherschaltung 6, einer Detektorschaltung 7 und einem Amplitudendiskriminator 8 zugeführt. Der Amplitudendiskriminator 8 erzeugt ein Signal p, falls die Amplitude des ersten Meßsignals U_{B1} außerhalb eines vorgegebenen Bereiches liegt. Das Signal p wird der Detektorschaltung 7 zugeführt und bewirkt dort eine Änderung des Schwellwertes 1, den die Detektorschaltung 7 aus dem Meßsignal U_{B1} ermittelt. Der Schwellwert 1 wird der Vergleicherschaltung 6 zugeführt, die das Meßsignal U_{B1} mit dem Schwellwert 1 vergleicht und ein Rechtecksignal erzeugt. Die Frequenz dieses Rechtecksignals enthält die Drehzahl n des Polrades 1 als Information.

Die Änderung des Schwellwertes durch das Signal p des Amplitudendiskriminators 8 bewirkt eine Veränderung des Tastverhältnisses am Ausgang der Vergleicherschaltung 6. Auf diese Weise wird eine unzulässig kleine oder große Luftspaltweite d durch ein stark verändertes Tastverhältnis angezeigt. Das Tastverhältnis dient somit als Information darüber, ob die Luftspaltweite d von einem vorgegebenen Toleranzbereich nach oben oder unten abweicht.

Die Ausgangssignale U_{S} der Vergleicherschaltung 6 werden von einer steuerbaren Stromquelle 9 in Stromsignale I_{S} gewandelt. Die Stromquelle 9 versorgt sich über eine erste Anschlußleitung 10, die mit einer Steuereinrichtung 11 verbunden ist, mit Strom. Von einer zweiten Anschlußleitung 10' werden in der Steuereinrichtung 11 den Stromsignalen I_{S} entsprechende Spannungssignale U_{S} über einem Lastwiderstand R_{L} abgegriffen. Die Leitungen bilden zugleich die beiden Pole der Betriebsspannungsversorgung des Sensors 2, von denen U_{B+} und U_{B-} nach Filterung und Stabilisierung den einzelnen Schaltungen 3, 5 bis 8 zugeführt werden.

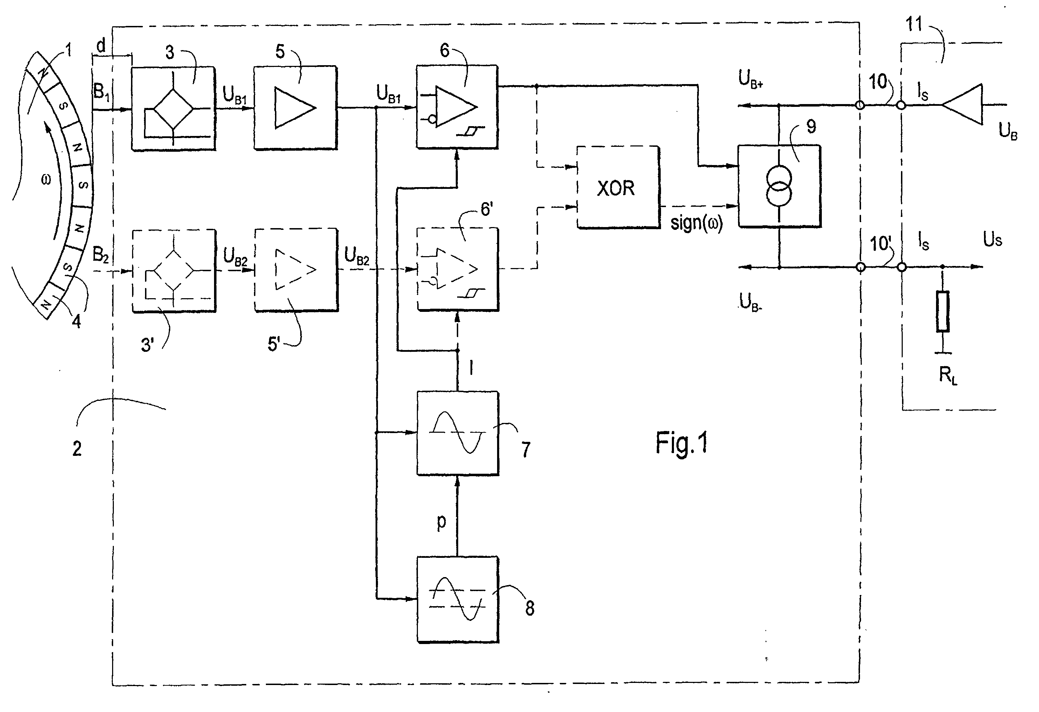

Die in Fig. 1 gestrichelt dargestellten Teile der Schaltung sind optional vorgesehen für den Fall, daß neben der Drehzahl auch die Drehrichtung bestimmt werden soll. Die beiden Sensorelemente 3, 3' sind so angeordnet, daß die ausgehenden Meßsignale B₁, B₂ um etwa 90° phasenverschoben sind. Die Meßsignale B₁, B₂ werden in der Detektorschaltung 7 in bekannter Weise, beispielsweise über eine Exklusiv-Oder-Schaltung XOR und eine weitere Vergleicherschaltung 6', in ein Drehrichtungssignal sign(omega) umgesetzt. Die Stromquelle 9 ist derart ausgebildet, daß sie in Abhängigkeit von diesem Signal zwei verschiedene Pegel für I_{S} einstellt. Die Steuereinrichtung 11 kann somit an dem Pegel I_{S} erkennen, in welcher Richtung sich das Polrad 1 dreht. Damit spart man eine dritte Leitungsverbindung zwischen dem Sensor 2 und der Steuereinrichtung 11.

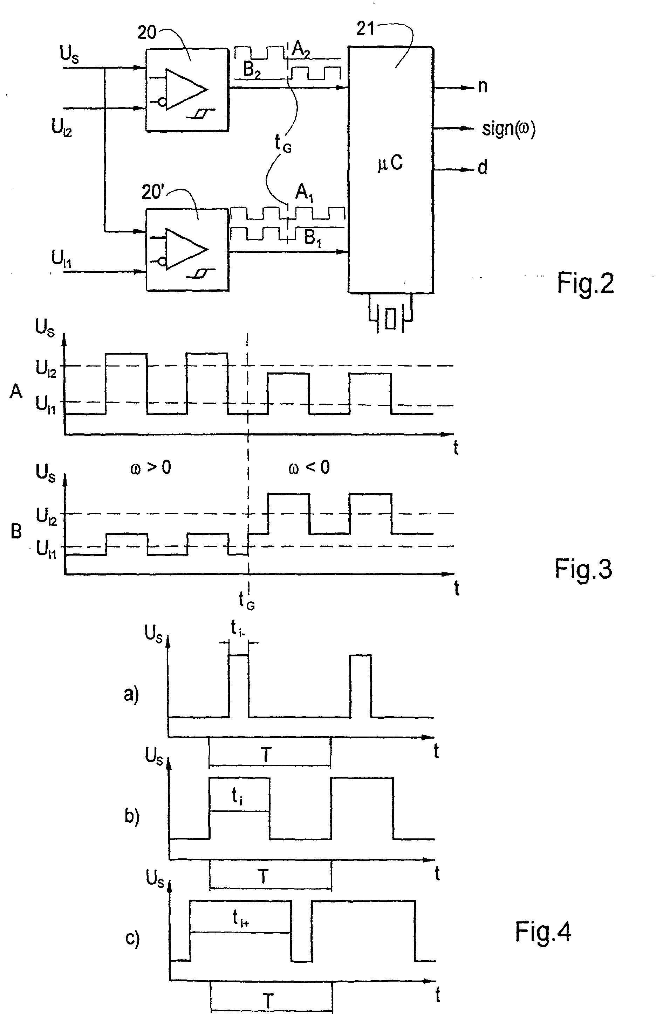

In Fig. 2 ist eine Auswerteschaltung dargestellt, wie sie beispielsweise in der Steuereinrichtung 11 vorgesehen sein kann. Sie besteht aus zwei Vergleicherschaltungen 20, 20', die das codierte Ausgangssignal U_{S} mit zwei verschiedenen Vergleichsspannungen Uₗ₁ und Uₗ₂ vergleichen. Die Ausgangssignale werden einem Mikrocomputer 21 zugeführt, der daraus die Drehzahl n, die Drehrichtung sign(omega), sowie die Spaltweitendiagnose d aus dem Tastverhältnis ermittelt.

Die an den Leitungsverbindungen zwischen den Vergleicherschaltungen 20, 20' und dem Mikrocomputer 21 dargestellten Signalverläufe beziehen sich auf die Beispiele in Fig. 3. Zum Zeitpunkt t_{G} wird die zuvor positive Drehrichtung negativ. Die Vergleichsspannung Uₗ₁ ist gerade so eingestellt, daß sie kleiner ist als die kleinere der beiden Signalamplituden. Uₗ₂ liegt zwischen der größeren und der kleineren Signalamplitude.

Im Beispiel A wird die Vergleichsspannung Uₗ₂ bei negativer Drehrichtung nie überschritten; das Signal A2 bleibt ab dem Zeitpunkt t_{G} konstant auf niedrigem Niveau. Das Signal A1 verläuft dagegen bei jeder Drehrichtung rechteckförmig, weil die Vergleichsspannung Uₗ₁ bei jeder Drehrichtung von den Signalimpulsen überschritten wird. Im Beispiel B wird die Vergleichsspannung Uₗ₂ nur bei negativer Drehrichtung von den Signalimpulsen überschritten. Die Vergleichsspannung Uₗ₁ wird bei positiver Drehrichtung nur während der Signalimpulse überschritten und bei negativer Drehrichtung dauernd. In der Folge zeigt das Signal B2 bei positiver Drehrichtung einen konstanten Verlauf auf niedrigem Niveau. Das Signal B1 verläuft bei negativer Drehrichtung konstant auf hohem Niveau. In den anderen Bereichen sind die Signale rechteckförmig. Sie haben dort die gleiche Frequenz wie das Signal U_{S}. Im Beispiel A ist die Drehrichtung also dann negativ, wenn das Signal A2 konstant ist. Im Beispiel B ist die Drehrichtung negativ, wenn das Signal B1 konstant ist. Ansonsten ist die Drehrichtung positiv.

Auf diese Weise entstehen bei den Beipielen A und B jeweils zwei Signale A₁ und A₂ bzw. B₁ und B₂. Der Mikrocomputer erkennt aus den beiden Signalen die Drehrichtung sign(omega), die Drehzahl n und auch die Spaltdiagnose d, denn das Tastverhältnis der Rechtecksignale A1, A2, B1, B2 ist das gleiche wie das von U_{S}.

Fig. 3 zeigt Ausgangssignale U_{S} für beide Beispiele A und B. Im Beispiel A erzeugt die Stromquelle bei positiver Drehrichtung eine größere Amplitude des Stroms als bei negativer Drehrichtung. Im Beispiel B wird dem Ausgangssignal U_{S} bei negativer Drehrichtung ein zusätzlicher Gleichanteil hinzugefügt. Die Steuereinrichtung 11 erkennt anhand der Amplitude bzw. des Gleichanteils des Ausgangssignals U_{S} die Drehrichtung des Polrades 1. Beispiel A hat den Vorteil, daß das Ausgangssignal U_{S} bei positiver Drehrichtung einen größeren Abstand zwischen der Signalspannung und Störspannungen aufweist.

Das im Normalbetrieb eingestellte Tastverhältnis tᵢ/T liegt bei etwa 50%. Falls die Luftspaltweite außerhalb eines vorgegebenen Normbereichs liegt, wird das Tastverhältnis von der Vergleicherschaltung 6 verändert. In Fig. 4 ist das Ausgangssignal U_{S} bei verschiedenen Tastverhältnissen dargestellt. In Fig. 4a ist der Luftspalt zu klein; das Tastverhältnis ist entsprechend kleiner eingestellt. Fig. 4b zeigt den Normalzustand und Fig. 4c den Zustand bei zu großer Luftspaltweite.

## Patentansprüche

1. Verfahren zur Überprüfung der Weite des Luftspaltes zwischen einem einen magnetischen Fluss verändernden codierten Rotor und mindestens einem, zur Registrierung der Drehbewegung des Rotors vorgesehenen, magnetfeldempfindlichen Sensorelement, an das eine Schaltung angeschlossen ist, und in welchem durch die magnetische Veränderung bei Drehung des Rotors Messsignale erzeugt werden, wobei die Messsignale von der Schaltung in Ausgangssignale umgesetzt werden, die von einer angeschlossenen Steuereinrichtung auswertbar sind und mittels mindestens eines vorgebbaren Schwellwertes aus den Messsignalen rechteckförmige Ausgangssignale erzeugt werden, **dadurch gekennzeichnet, dass** die Amplitude des Messsignals (U_{B1}, U_{B2}) überprüft wird und sobald die Amplitude außerhalb vorgegebener Grenzen liegt, zur Veränderung des Tastverhältnisses (tᵢ/T) der rechteckförmigen Ausgangssignale (I_{S})eine Änderung des aus den Messsignalen (U_{B1}, U_{B2}) ermittelten Schwellwertes (i) bewirkt wird, wobei der ermittelte Schwellwert (I) mit den Messsignalen (U_{B1}, U_{B2}) verglichen wird, wodurch das Tastverhältnis (tᵢ/T) der rechteckförmigen Ausgangssignale (I_{S}) bei Amplituden des Messsignals (U_{B1}, U_{B2}) außerhalb vorgegebener Grenzen sicher messbar von einem vorgegebenen Bereich des Tastverhältnisses (tᵢ/T) abweicht, während das Tastverhältnis (tᵢ/T) der rechteckförmigen Ausgangssignale (I_{S}) bei innerhalb des Toleranzbereichs liegender Luftspaltweite innerhalb des vorgegebenen Bereiches gehalten wird.

2. Verfahren nach Anspruch 1, **dadurch gekennzeichnet, dass** das Tastverhältnis (tᵢ/T) bei innerhalb eines Toleranzbereiches liegender Spaltweite (d) bei 50 % innerhalb eines Toleranzbereichs von ±15 % liegt und dass das Tastverhältnis (tᵢ/T) bei Amplituden des Messsignals außerhalb der vorgegebenen Grenzen mindestens 10 % von den jeweiligen Grenzen des Toleranzbereichs abweicht.

3. Schaltung zur Durchführung des Verfahrens nach einem der Ansprüche 1 oder 2 mit einem Drehzahlsensor mit Mitteln zur Überprüfung der Weite des Luftspaltes zwischen einem einen magnetischen Fluss verändernden codierten Rotor und mindestens einem, zur Registrierung der Drehbewegung des Rotors vorgesehenen, magnetfeldempfindlichen Sensorelement, an das die Schaltung angeschlossen ist, und in welchem durch die magnetische Veränderung bei Drehung des Rotors Messsignale erzeugt werden, wobei die Messsignale von der Vergleicherschaltung die mittels eines vorgebbaren Schwellwertes in Rechtecksignale umgesetzt werden, deren Tastverhältnis (tᵢ/T) innerhalb eines vorgegebenen Bereiches liegt und die von einer angeschlossenen Steuereinrichtung auswertbar sind, **dadurch gekennzeichnet, dass** die Messsignale an einen Amplitudendiskriminator (8) führen, der bei Amplituden des Messsignals (U_{B1}, U_{B2}) außerhalb vorgegebener Grenzen Signale (p) zur Änderung des Schwellwertes (I) erzeugt, welche einer Detektorschaltung (7) zugeleitet werden, die aus der Amplitude der Messsignale (U_{B1}, U_{B2}) einen geänderten Schwellwert (I) ermittelt, welcher der Vergleicherschaltung (6) vorgegeben wird, wodurch das Tastverhältnis (tᵢ/T) sicher messbar von dem vorgegebenen Bereich abweicht.

4. Schaltung nach Anspruch 3, **dadurch gekennzeichnet, dass** als Ausgangsstufe eine Stromquelle (9) vorgesehen ist, die von der Steuereinrichtung (11) über eine erste Leitung (10) mit einer Spannung (U_{S}) beaufschlagt ist und die über eine zweite Leitung (10') einen die Ausgangssignale bildenden Strom (I_{S}) der Steuereinrichtung (11) zuführt.

5. Schaltung nach Anspruch 4, **dadurch gekennzeichnet, dass** die Stromquelle (9) in Abhängigkeit von der Drehrichtung (sign(omega)) des Rotors (1) auf unterschiedliche Pegelwerte des Ausgangsstroms (Iₛ) einstellbar ist.

6. Schaltung nach einem der Ansprüche 3 bis 5, **dadurch gekennzeichnet, dass** der Sensor (2) zwei magnetfeldempfindliche Sensorelemente (3, 3') aufweist, die derart angeordnet sind, dass ihre Messsignale (U_{B1}, U_{B2}) phasenversetzt sind.

7. Schaltung nach einem der Ansprüche 3 bis 6, **gekennzeichnet durch** Mittel (XOR) zur Erzeugung eines Drehrichtungssignals (sign(omega)) zur Darstellung der Drehrichtung des Rotors (1).

8. Schaltung nach einem der Ansprüche 4 bis 7, **dadurch gekennzeichnet, dass** die Detektorschaltung (7) mit einer Exclusiv-Oder-Schaltung verbunden ist, welche an die Stromquelle (9) das Drehrichtungssignal (sign(omega))übermittelt und dass die Stromquelle (9) in Abhängigkeit von dem Drehrichtungssignal (sign(omega)) die Amplitude des Ausgangsstroms (Iₛ) ändert.

9. Schaltung nach Anspruch 8, **dadurch gekennzeichnet, dass** die Steuereinrichtung (11) anhand der Amplitude des Ausgangsstromes (Iₛ) der Schaltung (2) die Drehrichtung (sign(omega)) des Rotors (1) feststellt.

10. Schaltung nach einem der Ansprüche 3 bis 9, **dadurch gekennzeichnet, dass** bei Amplituden des Messsignals (U_{B1}, U_{B2})
außerhalb vorgegebener Grenzen die Änderung des Schwellwertes (1) durch den Amplitudendiskriminator (8) stetig erfolgt.

11. Schaltung nach einem der Ansprüche 3 bis 9 **dadurch gekennzeichnet, dass** bei Amplituden des Messsignals (U_{B1}, U_{B2}) außerhalb vorgegebener Grenzen die Änderung des Schwellwertes (1) durch den Amplitudendiskriminator (8) sprunghaft erfolgt.

12. Schaltung nach einem der Ansprüche 3 bis 11, **dadurch gekennzeichnet, dass** der Rotor ein magnetisches Polrad ist.

## Claims

1. Method for checking the width of the air gap between a coded rotor, which varies a magnetic flux, and at least one sensor element which is sensitive to magnetic fields and is provided for recording the rotary movement of the rotor, and to which a circuit is connected and in which measurement signals are generated by the magnetic variation during rotation of the rotor, the measurement signals being converted by the circuit into output signals which can be evaluated by a connected control device, and square-wave output signals being generated from the measurement signals by means of at least one prescribable threshold value, **characterized in that** the amplitude of the measurement signal (U_{B1}, U_{B2}) is checked and, as soon as the amplitude outside prescribed limits, a change in the threshold value (i) determined from the measurement signals (U_{B1}, U_{B2}) is effected in order to change the pulse duty factor (tᵢ/T) of the square-wave output signal (Iₛ), with the determined threshold value (I) being compared with the measurement signals (U_{B1}, U_{B2}), with the result that the pulse duty factor (tᵢ/T) of the square-wave output signals (Iₛ) deviates in a reliably measurable fashion from a prescribed range of the pulse duty factor (tᵢ/T) in the case of amplitudes of the measurement signal (U_{B1}, U_{B2}) outside prescribed limits, while the pulse duty factor (tᵢ/T) of the square-wave output signals (I_{b}) is kept within the prescribed range in the case of an air gap width lying within the tolerance range.

2. Method according to Claim 1, **characterized in that** the pulse duty factor (tᵢ/T) lies at 50% within a tolerance band of ±15% in the case of a gap width (d) lying within a tolerance range, and **in that** the pulse duty factor (tᵢ/T) deviates at least by 10% from the respective limits of the tolerance band in the case of amplitudes of the measurement signal outside the prescribed limits.

3. Circuit for carrying out the method according to one of Claims 1 or 2, having a speed sensor with means for checking the width of the air gap between a coded rotor, which varies a magnetic flux, and at least one sensor element which is sensitive to magnetic fields and is provided for recording the rotary movement of the rotor, and to which a circuit is connected and in which measurement signals are generated by the magnetic variation during rotation of the rotor, the measurement signals of the comparator circuit being converted by means of a prescribable threshold value into square wave signals whose pulse duty factor (tᵢ/T) lies within a prescribable range, and which can be evaluated by a connected control device, **characterized in that** the measurement signals lead to an amplitude discriminator (8) which, in the case of amplitudes of the measurement signal (U_{B1}, U_{B2}) outside prescribed limits, generates signals (p), changing the threshold value (I) which are fed to a detector circuit (7) which determines a changed threshold value (I), prescribed for the comparator circuit (6), from the amplitude of the measurement signals (U_{B1}, U_{B2}), with the result that the pulse duty factor (tᵢ/T) deviates in a reliably measurable fashion from the prescribed range.

4. Circuit according to Claim 3, **characterized in that** there is provided as output stage a current source (9) to which a voltage (Uₛ) is applied by the control device (11) via a first line (10), and which feeds a current (Iₛ) forming the output signals to the control device (11) via a second line (10').

5. Circuit according to Claim 4, **characterized in that** the current source (9) can be set to different level values of the output current (Iₛ) as a function of the direction of rotation (sign (omega)) of the rotor (1).

6. Circuit according to one of Claims 3 to 5, **characterized in that** the sensor (2) has two sensor elements (3, 3') which are sensitive to magnetic fields and are arranged in such a way that their measurement signals (U_{B1}, U_{B2}) are phase-offset.

7. Circuit according to one of Claims 3 to 6, **characterized by** means (XOR) for generating a signal (sign (omega)) for the direction of rotation for the purpose of representing the direction of rotation of the rotor (1).

8. Circuit according to one of Claims 4 to 7, **characterized in that** the detector circuit (7) is connected to an exclusive-or circuit which transmits to the current source (9) the signal (sign (omega)) for the direction of rotation, and **in that** the current source (9) changes the amplitude of the output current (I_{S}) as a function of the signal (sign (omega)) for the direction of rotation.

9. Circuit according to Claim 8, **characterized in that** the control device (11) determines the direction of rotation (sign (omega)) of the rotor (1) with the aid of the amplitude of the output current (I_{S}) of the circuit (2).

10. Circuit according to one of Claims 3 to 9, **characterized in that** the change in the threshold value (1) is performed continuously by the amplitude discriminator (8) in the case of amplitudes of the measurement signals (U_{B1}, U_{B2}) outside prescribed limits.

11. Circuit according to one of Claims 3 to 9, **characterized in that** the change in the threshold value (1) is performed discontinuously by the amplitude discriminator (8) in the case of amplitudes of the measurement signals (U_{B1}, U_{B2}) outside prescribed limits.

12. Circuit according to one of Claims 3 to 11, **characterized in that** the rotor is a magnet wheel.

## Revendications

1. Méthode pour vérifier la largeur de l'entrefer entre un rotor codé modifiant un flux magnétique et au moins un élément de captage, lequel est sensible aux champs magnétiques, étant prévu pour enregistrer le mouvement de rotation du rotor, auquel est connecté un circuit et dans lequel sont générés, du fait de la modification magnétique lors de la rotation du rotor, des signaux de mesure, lesdits signaux de mesure étant convertis par le circuit en signaux de sortie, lesquels peuvent être analysés par un dispositif de commande connecté, et des signaux de sortie rectangulaires étant générés sur la base des signaux de mesure au moyen d'au moins une valeur seuil prédéterminable, **caractérisée en ce que** l'amplitude du signal de mesure (U_{B1}, U_{B2}) est vérifiée et **en ce que**, dès que l'amplitude se trouve en dehors de limites données, une modification de la valeur seuil (i) déterminée sur la base des signaux de mesure (U_{B1}, U_{B2}) est provoquée pour modifier le rapport cyclique (tᵢ/ T) des signaux de sortie rectangulaires (I_{S}), la valeur seuil (I) déterminée étant comparée avec les signaux de mesure (U_{B1}, U_{B2}), de sorte que le rapport cyclique (tᵢ/ T) des signaux de sortie rectangulaires (I_{S}) s'écarte d'une plage donnée du rapport cyclique (tᵢ / T) de manière sûrement mesurable pour des amplitudes du signal de mesure (U_{B1}, U_{B2}) situées en dehors de limites données tandis que le rapport cyclique (tᵢ/ T) des signaux de sortie rectangulaires (I_{S}) est maintenu dans les limites de la plage donnée lorsque la largeur de l'entrefer se trouve dans la plage de tolérance.

2. Méthode selon la revendication 1, **caractérisée en ce que** le rapport cyclique (tᵢ/ T) est de 50 % dans une plage de tolérance de ± 15 % pour une largeur (d) de l'entrefer située dans une plage de tolérance et **en ce que** le rapport cyclique (tᵢ/ T) s'écarte d'au moins 10 % des limites respectives de la plage de tolérance pour des amplitudes du signal de mesure situées en dehors des limites données.

3. Circuit pour la mise en oeuvre de la méthode selon l'une des revendications 1 ou 2, comprenant un capteur tachymétrique avec des moyens pour vérifier la largeur de l'entrefer entre un rotor codé modifiant un flux magnétique et au moins un élément de captage, lequel est sensible aux champs magnétiques, étant prévu pour enregistrer le mouvement de rotation du rotor, auquel est connecté le circuit et dans lequel sont générés, du fait de la modification magnétique lors de la rotation du rotor, des signaux de mesure, lesdits signaux de mesure étant convertis par le circuit comparateur, au moyen d'une valeur seuil prédéterminable, en signaux rectangulaires dont le rapport cyclique (tᵢ / T) se trouve dans une plage donnée et qui peuvent être analysés par un dispositif de commande connecté, **caractérisé en ce que** les signaux de mesure conduisent à un discriminateur d'amplitude (8) qui, pour des amplitudes du signal de mesure (U_{B1}, U_{B2}) situées en dehors des limites données, génère des signaux (p) pour modifier la valeur seuil (I), lesquels sont amenés à un circuit détecteur (7) qui détermine, sur la base de l'amplitude des signaux de mesure (U_{B1}, U_{B2}), une valeur seuil (I) modifiée, laquelle est assignée au circuit comparateur (6) de sorte que le rapport cyclique (tᵢ / T) s'écarte de manière sûrement mesurable de la plage donnée.

4. Circuit selon la revendication 3, **caractérisé en ce qu'**est prévue, en tant que niveau de sortie, une source de courant (9) alimentée avec une tension (U_{S}) par le dispositif de commande (11) par l'intermédiaire d'une première ligne (10) et qui, par l'intermédiaire d'une deuxième ligne (10'), amène audit dispositif de commande (11) un courant (I_{S}) constituant les signaux de sortie.

5. Circuit selon la revendication 4, **caractérisé en ce que** la source de courant (9) est réglable, en dépendance du sens de rotation (sign(omega)) du rotor (1), sur différentes valeurs de niveau du courant de sortie (I_{S}).

6. Circuit selon l'une des revendications 3 à 5, **caractérisé en ce que** le capteur (2) comporte deux éléments de captage (3, 3') sensibles aux champs magnétiques, lesquels sont disposés de telle manière que leurs signaux de mesure (U_{B1}, U_{B2}) sont déphasés.

7. Circuit selon l'une des revendications 3 à 6, **caractérisé par** des moyens (XOR) pour générer un signal relatif au sens de la rotation (sign(omega)) pour représenter le sens de la rotation du rotor (1).

8. Circuit selon l'une des revendications 4 à 7, **caractérisé en ce que** le circuit détecteur (7) est relié à un circuit OU exclusif, lequel transmet le signal relatif au sens de la rotation (sign(omega)) à la source de courant (9), et **en ce que** la source de courant (9) modifie l'amplitude du courant de sortie (I_{S}) en dépendance du signal relatif au sens de la rotation (sign(omega)).

9. Circuit selon la revendication 8, **caractérisé en ce que** le dispositif de commande (11) établit le sens de la rotation (sign(omega)) du rotor (1) sur la base de l'amplitude du courant de sortie (I_{S}) du circuit (2).

10. Circuit selon l'une des revendications 3 à 9, **caractérisé en ce que** la modification de la valeur seuil (1) par le discriminateur d'amplitude (8) se fait en continu pour des amplitudes du signal de mesure (U_{B1}, U_{B2}) situées en dehors de limites données.

11. Circuit selon l'une des revendications 3 à 9, **caractérisé en ce que** la modification de la valeur seuil (1) par le discriminateur d'amplitude (8) se fait en discontinu pour des amplitudes du signal de mesure (U_{B1}, U_{B2}) situées en dehors de limites données.

12. Circuit selon l'une des revendications 3 à 11, **caractérisé en ce que** le rotor est une roue polaire magnétique.
